# EUROPÄISCHE PATENTANMELDUNG

(11) **EP 1 747 925 A1**
(43) Veröffentlichungstag der Anmeldung: **31.01.2007**
(21) Anmeldenummer: 05016283.3
(22) Anmeldetag: 27.07.2005
(51) Int. Cl.: B60J 7/00, B60J 7/22

(54) **Baugruppe aus einem Fahrzeug-Faltverdeck und einem Rollo**

(71) Anmelder: ArvinMeritor GmbH, 63128 Dietzenbach (DE)
(72) Erfinder: Grimm, Rainer, 60598 Frankfurt (DE); Becher, Thomas, 63110 Rodgau (DE); Röder, Joachim, 63165 Mühlheim (DE); Böhm, Horst, 60599 Frankfurt (DE)
(74) Vertreter: Kitzhofer, Thomas

(57) **Zusammenfassung**

Bei einer Baugruppe aus einem Fahrzeug-Faltverdeck (18), das eine Dachöffnung (12) abdecken oder freigeben kann, und einem Rollo (20), das unterhalb des geschlossenen Faltverdecks (18) angeordnet ist, kann das Rollo (20) die durch das Faltverdeck (18) freigegebene Dachöffnung (12) ganz oder teilweise abdecken.

## Beschreibung

Die Erfindung betrifft eine Baugruppe aus einem Fahrzeug-Faltverdeck und einem Rollo.

Bislang besitzt ein Faltverdeck neben der von außen sichtbaren Außenhaut eine Innenverkleidung, die für einen optisch ansprechenden Eindruck sorgt und das Gestänge des Verdecks abdeckt. Die Optik der Innenverkleidung kann an die restliche Fahrzeuginnenverkleidung angeglichen werden. Die Fertigung derartiger Faltverdecke ist jedoch aufwendig und teuer.

Mithilfe der Erfindung lassen sich die Kosten für ein Faltverdeck reduzieren.

Zu diesem Zweck umfaßt eine Baugruppe ein Fahrzeug-Faltverdeck, das eine Dachöffnung abdecken oder freigeben kann, und ein Rollo, das unterhalb des geschlossenen Faltverdecks angeordnet ist, wobei das Rollo die durch das Faltverdeck freigegebene Dachöffnung ganz oder teilweise abdecken kann. Da die Innenseite des Faltverdecks vom Fahrzeuginnenraum gesehen durch das Rollo verdeckt ist, braucht das Faltverdeck innenseitig nicht aufwendig verkleidet zu werden. Außerdem gewinnt man an Funktionalität, da das Rollo z.B. als zusätzlicher Sonnen- oder Windschutz eingesetzt werden kann.

Bevorzugt bildet das Rollo die Innenverkleidung für das Faltverdeck, so daß das Faltverdeck selbst ohne integrierte Innenverkleidung ausgeführt sein kann, um Kosten zu sparen.

Eine Innenseite des Faltverdecks ist vom Fahrzeuginnenraum gesehen vorzugsweise stets vom Rollo abgedeckt. So kann es nie dazu kommen, daß die Innenseite des Faltverdecks, die keinen hohen optischen Anforderungen genügen muß, vom Innenraum aus sichtbar ist.

Vorteilhaft liegt ein vorderer Rand des Rollos in Richtung Fahrzeugfront stets mindestens auf gleicher Höhe mit einem vorderen Rand des Faltverdecks. Über den nicht vom Faltverdeck abgedeckten Bereich der Dachöffnung kann das Rollo jedoch unabhängig vom Faltverdeck verschiebbar sein. Dies erlaubt es dem Fahrzeuginsassen, individuell und unabhängig von der Stellung des Faltverdecks das Rollo für den freiliegenden Teil der Dachöffnung als Sonnen- oder Windschutz einzusetzen.

Bei einer Schließbewegung des Faltverdecks wird vorteilhaft das Rollo immer mitbewegt, sobald in Schließrichtung ein vorderer Rand des Faltverdecks einen vorderen Rand des Rollos erreicht hat. So kann es nicht zu einer unbeabsichtigten Freilegung der Innenseite des Faltverdecks kommen.

Faltverdeck und Rollo sind bevorzugt über wenigstens einen elektrischen Antrieb bewegbar. Für das Rollo, aber auch für das Faltverdeck kann zusätzlich oder alternativ auch ein zweiter Antrieb oder ein manueller Betrieb vorgesehen sein.

Die Dachöffnung erstreckt sich bevorzugt im wesentlichen bis zu einem unteren Ende der hinteren Fahrzeugsäule. Das Fahrzeug weist also keine lagefeste Heckscheibe auf.

Vorzugsweise läßt sich das Faltverdeck in einem gefalteten Zustand zusammen mit einer Welle des Rollos zwischen einer ersten und einer zweiten Stellung verfahren, wobei in der ersten Stellung das gefaltete Faltverdeck und die Welle des Rollos am oberen Ende der Heckscheibe und in der zweiten Stellung hinter einer Rückenlehne eines Fahrzeugsitzes liegen.

Diese Anordnung bietet den Vorteil, daß das Rollo auch als Windschott positioniert werden und somit eine dritte Funktion übernehmen kann.

Das Faltverdeck ist bevorzugt wie herkömmlich bekannt in zwei in Fahrzeuglängsrichtung weisenden, parallelen Schienen geführt, wobei das Faltverdeck und das Rollo vorzugsweise in unterschiedlichen Führungen laufen. Das Rollo kann z.B. in einer Seitenführung laufen.

Im folgenden wird die Erfindung unter Bezug auf die beigefügten Zeichnungen näher beschrieben. In der Zeichnung zeigen:
- Figur 1 eine schematische perspektivische Ansicht einer erfindungsgemäßen Baugruppe, eingebaut in ein Fahrzeug, in einer ersten Stellung des Faltverdecks und einer möglichen Position des Rollos;
- Figur 2 das Fahrzeug aus Figur 1, wobei sich das Rollo in einer anderen möglichen Position befindet;
- Figur 3 eine schematische Schnittansicht des Fahrzeugs aus Figur 1 bei geschlossenem Faltverdeck;
- Figur 4 das Fahrzeug aus Figur 3, wobei sich das Faltverdeck in einer ersten Stellung und das Rollo in einer möglichen Position befindet;
- Figur 5 das Fahrzeug aus Figur 3, wobei sich das Rollo in einer weiteren möglichen Position befindet;
- Figur 6 eine schematische perspektivische Darstellung eines Fahrzeugs mit einer eingebauten erfindungsgemäßen Baugruppe in einer zweiten Stellung des Faltverdecks;
- Figur 7 das Fahrzeug aus Figur 6 mit als Windschott aufgestelltem Rollo;
- Figur 8 eine schematische Schnittansicht des Fahrzeugs aus Figur 6, wobei sich das Faltverdeck in der zweiten Stellung befindet;
- Figur 9 das Fahrzeug aus Figur 8 mit als Windschott aufgestelltem Rollo; und
- Figur 10 eine weitere schematische Perspektivansicht eines Fahrzeugs mit einer erfindungsgemäßen Baugruppe.

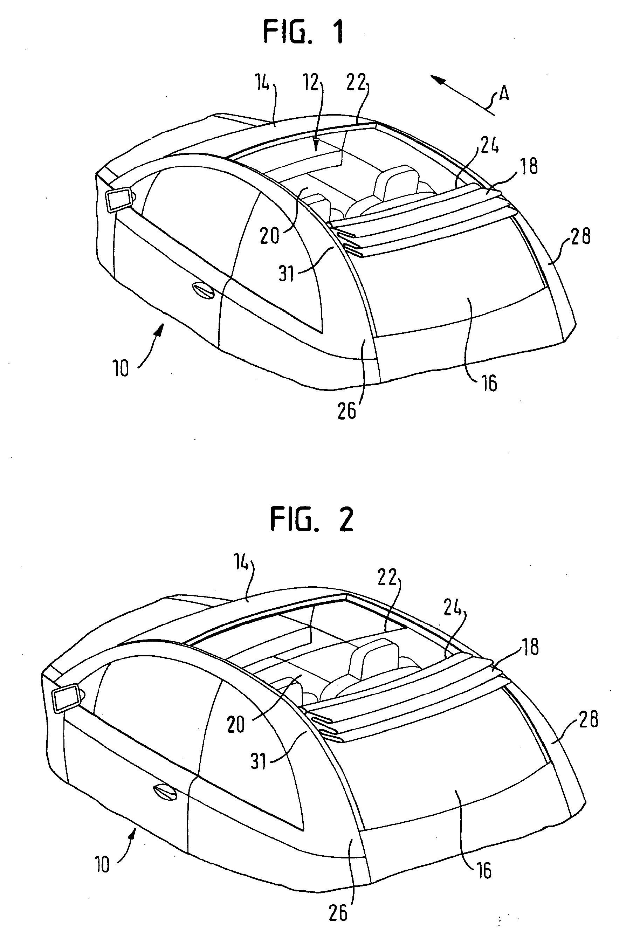

Figur 1 zeigt ein Fahrzeug 10, hier einen Personenkraftwagen, mit einem bekannten feststehenden Dachrahmen, in dem eine Dachöffnung 12 ausgebildet ist. Die Dachöffnung 12 reicht hier von einem oberen Rand einer Windschutzscheibe 14 bis zu einem unteren Ende 26 einer hinteren Fahrzeugsäule 28. Je nach Fahrzeugtyp ist die hintere Fahrzeugsäule 28 die B-, C- oder D-Säule.

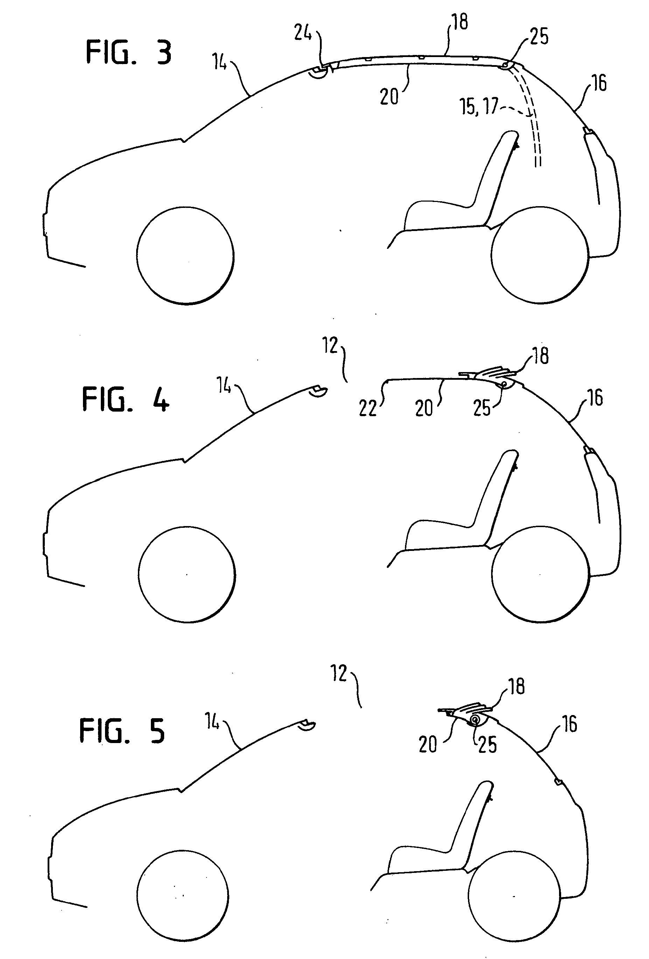

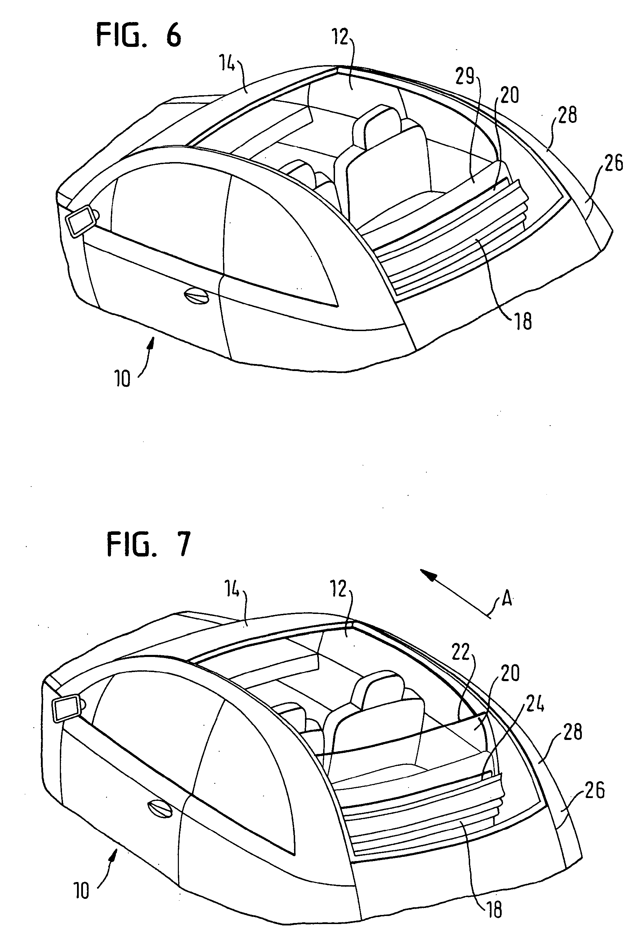

Längs der Dachöffnung 12 in Richtung A zur Fahrzeugfront sind zu beiden Seiten Führungsschienen 15 im Dachrahmen bzw. der hinteren Fahrzeugsäule 28 angeordnet (angedeutet in Figur 3). Ein Faltverdeck 18, in Figur 3 im vollständig geschlossenen und in Figur 6 im vollständig geöffneten Zustand gezeigt, ist in den Führungsschienen 15 geführt und kann die Dachöffnung 12 auf bekannte Weise vollständig verschließen. Am rückwärtigen Ende des Faltverdecks 18 schließt sich eine aus einer transparenten, biegsamen Folie gebildete Heckscheibe 16 an.

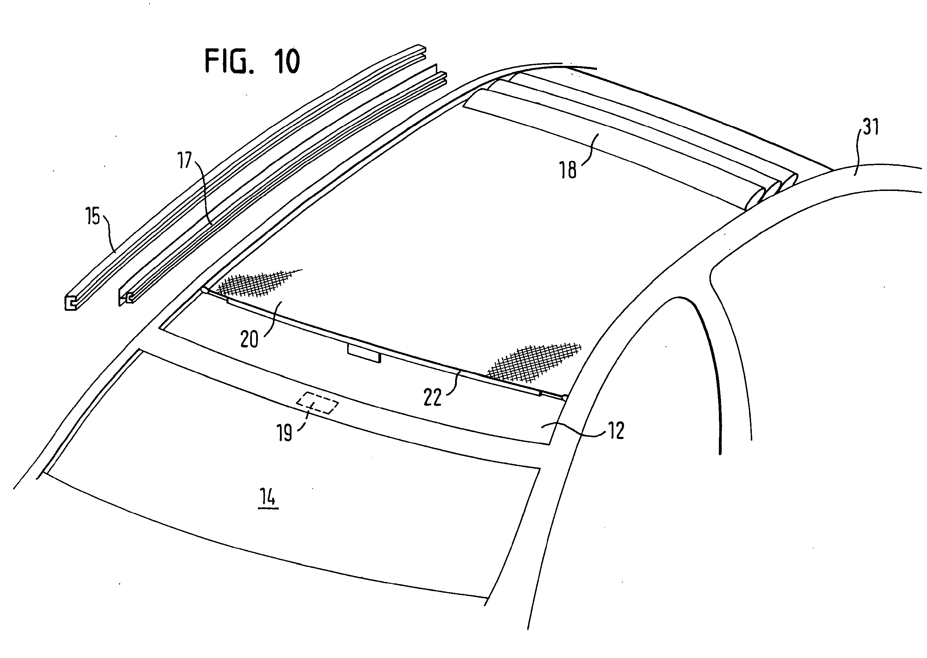

Unterhalb des Faltverdecks 18 ist ein Rollo 20 angeordnet, das in separaten, parallelen Führungsschienen 17 analog zum Faltverdeck 18 in einer Seitenführung läuft. Die Führungen sind beispielhaft in Figur 10 dargestellt. Die Führungen für das Faltverdeck 18 und das Rollo 20 könnten auch in einem einzigen Schienensystem verwirklicht sein.

Das Rollo 20 übernimmt die Funktion einer Innenverkleidung für das Faltverdeck 18, das selbst ohne integrierte Innenverkleidung ausgebildet ist. Vom Fahrzeuginnenraum aus gesehen sieht der Fahrzeuginsasse daher nur das Rollo 20, nie aber die Innenseite des Faltverdecks 18 und dessen Gestänge. Um dies zu gewährleisten, ist die Mechanik des Faltverdecks 18 und des Rollos 20 so ausgebildet, daß ein vorderer Rand 22 des Rollos 20 in Richtung A stets wenigstens auf gleicher Höhe mit einem vorderen Rand 24 des Faltverdecks 18 liegen muß. Es ist also ausgeschlossen, daß das Rollo 20 entgegen der Richtung A hinter den vorderen Rand 24 des Faltverdecks 18 zurückgeschoben werden kann, so das die Innenseite des Faltverdecks 18 vom Fahrzeuginnenraum aus sichtbar würde.

In dem freigegebenen Bereich der Dachöffnung 12 zwischen dem vorderen Rand 24 des Faltverdecks 18 und dem oberen Ende der Windschutzscheibe 14 ist jedoch das Rollo 20 manuell oder auch elektrisch angetrieben unabhängig von der Stellung des Faltverdecks 18 bewegbar. So kann das Rollo 20 zusätzlich zu seiner Funktion als Ersatz der Innenverkleidung des Faltverdecks 18 auch als individuell einstellbarer Sonnen- oder Windschutz genutzt werden.

In den Figuren 3 bis 5 sind verschiedene mögliche Stellungen des Faltverdecks 18 und des darunter liegenden Rollos 20 gezeigt. Ist das Faltverdeck 18 geschlossen, so ist zwangsläufig auch das Rollo 20 komplett nach vorne gezogen, wie in Figur 3 gezeigt ist. Das Faltverdeck 18 läßt sich entlang des Dachrahmens soweit zurückschieben, bis es vollständig gefaltet ist. In dieser ersten Stellung liegt das gefaltete Faltverdeck 18 an einem oberen Ende 31 der hinteren Fahrzeugsäule 28 (Figur 4 und Figur 5). Unterhalb des Faltverdecks 18 erstreckt sich die Heckscheibe 16 entlang der Dachöffnung 12 bis zum unteren Ende 26 der hinteren Fahrzeugsäulen 28.

In dieser Stellung des Faltverdecks 18 läßt sich das Rollo 20 z.B. bis in die Mitte der Dachöffnung 12 vorziehen, um den vorderen Teil der freigegebenen Dachöffnung 12 freizulassen (Figur 4). Es ist aber auch möglich, das Rollo 20, wie in Figur 5 gezeigt, bis zum gefalteten Faltverdeck 18 nach hinten zu schieben.

Rollo 20 und Faltverdeck 18 können von einem gemeinsamen oder von getrennten elektrischen Antrieben 19 (schematisch in Figur 10) bewegt werden.

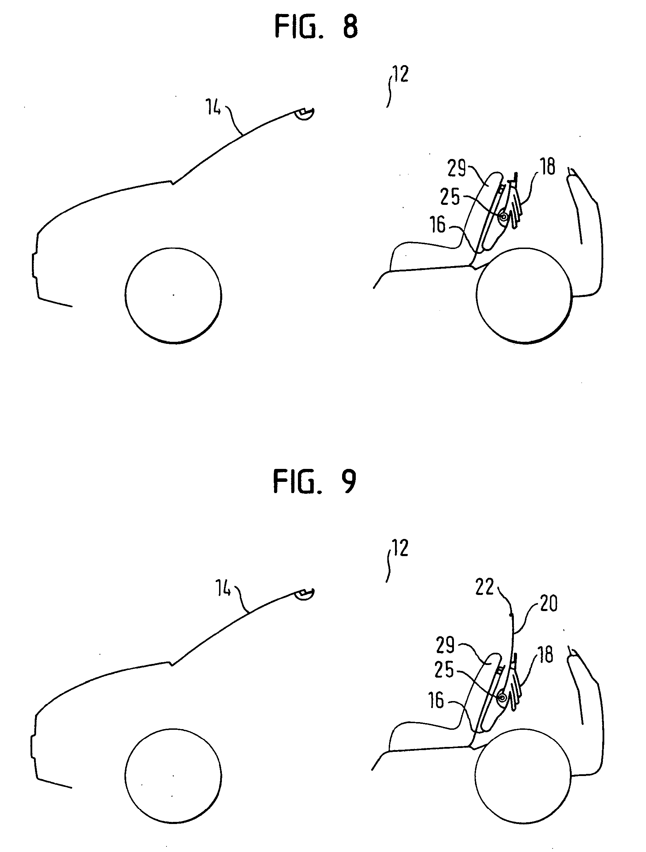

Das Faltverdeck 18 und das Rollo 20 sind so in den Führungsschienen 15 montiert, daß sich das gefaltete Faltverdeck 18 und eine Welle 25 des Rollos 20 zusammen in eine zweite Stellung bis auf Höhe einer Rückenlehne 29 (hier eines Rücksitzes) verfahren lassen, wie in Figur 8 und 9 gezeigt ist.

Hat die Baugruppe aus gefaltetem Faltverdeck 18 und Rollo 20 die zweite Stellung erreicht, wird das untere Ende der Heckscheibe 16 manuell von der Karosserie gelöst und an der Rückenlehne befestigt, z.B. über ein bekanntes Reißverschlußsystem.

In dieser Stellung kann das Rollo 20 ein Stück nach vorne geschoben werden, wie in Figur 7 und 9 gezeigt ist, bis es die Stellung eines herkömmlichen Windschotts einnimmt und auch dessen Funktion erfüllt. Das Rollo 20 könnte jedoch auch weiter über die Dachöffnung 12 verschoben werden, um als Sonnen- oder Windschutz zu dienen.

Zum Schließen des Verdecks wird umgekehrt verfahren. Zuerst wird das untere Ende des Heckscheibe 16 wieder an der Karosserie befestigt. Dann werden das gefaltete Faltverdeck 18 und das Rollo 20 zusammen aus der zweiten bis in die erste Stellung verfahren (elektrisch oder manuell). Jetzt kann das Rollo 20 ganz oder teilweise über den freiliegenden Bereich der Dachöffnung 12 gezogen werden, während das Faltverdeck 18 offen, also gefaltet bleibt. Wird auch das Faltverdeck 18 geschlossen, wird automatisch das Rollo 20 mit in Richtung A zur Fahrzeugfront bewegt, sobald der vordere Rand 24 des Faltverdecks 18 den vorderen Rand 22 des Rollos 20 erreicht. Ist das Faltverdeck 18 vollständig geschlossen, befindet sich immer auch das Rollo 20 in seiner geschlossenen, also ganz zur Fahrzeugfront gezogenen Stellung.

| Bezugszeichen | Benennung |
|---|---|
| 10 | Fahrzeug |
| 12 | Dachöffnung |
| 14 | Windschutzscheibe |
| 15 | Führungsschienen |
| 16 | Heckscheibe |
| 17 | Führungsschienen |
| 18 | Faltverdeck |
| 19 | Antrieb |
| 20 | Rollo |
| 22 | Rand |
| 24 | Rand |
| 25 | Welle |
| 26 | Ende |
| 28 | Fahrzeugsäule |
| 29 | Rückenlehne |
| 31 | Ende |

## Patentansprüche

1. Baugruppe aus einem Fahrzeug-Faltverdeck (18), das eine Dachöffnung (12) abdecken oder freigeben kann,
und einem Rollo (20), das unterhalb des geschlossenen Faltverdecks (18) angeordnet ist,
wobei das Rollo (20) die durch das Faltverdeck (18) freigegebene Dachöffnung (12) ganz oder teilweise abdecken kann.

2. Baugruppe nach Anspruch 1, **dadurch gekennzeichnet, daß** die Innenseite des Faltverdecks (18) vom Fahrzeuginnenraum gesehen stets vom Rollo (20) abgedeckt ist.

3. Baugruppe nach einem der vorhergehenden Ansprüche, **dadurch gekennzeichnet, daß** das Rollo (20) eine Innenverkleidung für das Faltverdeck (18) bildet.

4. Baugruppe nach Anspruch 3, **dadurch gekennzeichnet, daß** das Faltverdeck (18) selbst ohne integrierte Innenverkleidung ausgeführt ist.

5. Baugruppe nach einem der vorhergehenden Ansprüche, **dadurch gekennzeichnet, daß** ein vorderer Rand (22) des Rollos (20) in Richtung Fahrzeugfront stets wenigstens auf gleicher Höhe mit einem vorderen Rand (24) des Faltverdecks (18) liegt.

6. Baugruppe nach einem der vorhergehenden Ansprüche, **dadurch gekennzeichnet, daß** über den nicht vom Faltverdeck (18) abgedeckten Bereich der Dachöffnung (12) das Rollo (20) unabhängig vom Faltverdeck (18) verschiebbar ist.

7. Baugruppe nach einem der vorhergehenden Ansprüche, **dadurch gekennzeichnet, daß** bei einer Schließbewegung des Faltverdecks (18) das Rollo (20) immer mitbewegt wird, sobald in Schließrichtung ein vorderer Rand (24) des Faltverdecks (18) einen vorderen Rand (22) des Rollos (20) erreicht hat.

8. Baugruppe nach einem der vorhergehenden Ansprüche, **dadurch gekennzeichnet, daß** das Faltverdeck (18) und das Rollo (20) über wenigstens einen elektrischen Antrieb bewegbar sind.

9. Baugruppe nach einem der vorhergehenden Ansprüche, **dadurch gekennzeichnet, daß** das Rollo (20) in einer Seitenführung geführt ist.

10. Baugruppe nach einem der vorhergehenden Ansprüche, **dadurch gekennzeichnet, daß** sich die Dachöffnung (12) im wesentlichen bis zu einem unteren Ende (26) der hinteren Fahrzeugsäule (28) erstreckt.

11. Baugruppe nach einem der vorhergehenden Ansprüche, **dadurch gekennzeichnet, daß** das Faltverdeck (18) in einem gefalteten Zustand und eine Welle (25) des Rollos (20) zwischen einer ersten und einer zweiten Stellung verfahren werden können.

12. Baugruppe nach Anspruch 10, **dadurch gekennzeichnet, daß** in der ersten Stellung das gefaltete Faltverdeck (18) und die Welle (25) des Rollos (20) am oberen Ende der Heckscheibe (16) liegen.

13. Baugruppe nach einem der Ansprüche 10 und 11, **dadurch gekennzeichnet, daß** in der zweiten Stellung das gefaltete Faltverdeck (18) und die Welle (25) des Rollos (20) hinter einer Rückenlehne (29) liegen.

14. Baugruppe nach einem der Ansprüche 9 bis 12, **dadurch gekennzeichnet, daß** das Rollo (20) als Windschott positioniert werden kann.

15. Baugruppe nach einem der vorhergehenden Ansprüche, **dadurch gekennzeichnet, daß** das Faltverdeck (18) und das Rollo (20) in unterschiedlichen Führungen geführt sind.
